# EUROPEAN PATENT SPECIFICATION

(11) **EP 0 323 908 B1**
(45) Date of publication and mention of the grant of the patent: **06.07.1994**
(21) Application number: 89300097.6
(22) Date of filing: 06.01.1989
(51) Int. Cl.: B62J 35/00, B62J 11/00, B62M 7/06

(54) **Motor scooter**
Motorroller
Scooter

(30) Priority: 08.01.1988 JP 2256/88; 11.01.1988 JP 1169/88
(43) Date of publication of application: 12.07.1989
(73) Proprietor: HONDA GIKEN KOGYO KABUSHIKI KAISHA, Minato-ku, Tokyo (JP)
(72) Inventor: Yokoyama, Masashi c/o Honda Gijutsu Kenkyusho-Nai, Wako-shi Saitama (JP); Hara, Naoki c/o Honda Gijutsu Kenkyusho-Nai, Wako-shi Saitama (JP)
(74) Representative: Leale, Robin George

(56) References cited:
- EP-A- 0 255 254
- DE-C- 168 541
- DE-U- 8 708 367
- GB-A- 2 049 582
- GB-A- 2 184 990
- JP-A-60 154 969

## Description

The present invention relates to motor scooters and, more particularly, to motor scooters of the two-wheel or three-wheel type having a foot rest in front of and below the seat and a fuel tank assembly for installation therein.

Fuel tanks for motor scooters contain fuel and are a comparatively large and heavy component as compared with the other accessories of the motor scooter. Therefore, the fuel tank must meet the following conditions in mounting the same on the motor scooter.
(1) it must not degrade the running performance of the motor scooter;
(2) it must be protected from damage;
(3) it must not interfere with the other functional parts of the vehicle;
(4) it must have an adequate capacity; and
(5) it must not detract from the space utilizable as a luggage compartment nor the external appearance of the motor scooter.

It is accordingly desirable that the fuel tanks employed in motor scooters be of a simple construction and capable of meeting the foregoing requisite conditions.

In a known motor scooter, as the fuel pump must be disposed remote from the engine of the power unit, which is located in the rear portion of the motor scooter, a comparatively long fuel supply pipe is necessary for connecting the fuel pump to the engine. Still further, the components of the fuel supply system, such as the fuel pump, must be provided under the foot rest floor under limited conditions of arrangement, which makes compact construction of the fuel supply system difficult.

Japanese Patent Laid Open No. 60-154969 discloses a motor scooter comprising a frame mounting longitudinally spaced front and rear wheels, a body cover covering said frame and having a center cover part extending upwardly to the front end of a seat, a foot rest floor positioned forwardly of said center cover part, said frame including two laterally spaced frame pipes which support said foot rest floor, and a fuel tank positioned below said foot rest floor adjacent said frame pipes.

The present invention is characterised in that said fuel tank extends into the central space which is bounded on each side by said laterally spaced frame pipes, the fuel tank being formed in its rear portion with a bulge in its upper surface, and a fuel filler mouth being provided which penetrates the said rear portion of the fuel tank in the said bulge, so that an air space surrounds the said fuel filler mouth within the bulge.

The fuel tank is thus disposed within a dead space under the foot rest floor, and is protected from damage by the right and left frame pipes of the motor scooter frame structure. Furthermore, since the fuel filling mouth may be formed in the rear portion of the fuel tank, a flat wide area is then available for the foot rest floor. Still further, the upper wall of the fuel tank may be inclined toward the front to suppress the disturbance of the surface of the fuel contained in the fuel tank by the vibrations of the motor scooter.

The fuel filling mouth may be located within the space behind the center cover. A fuel strainer and a fuel pump may be disposed beside the fuel filling mouth.

According to a preferred embodiment, the fuel filling mouth does not project from the upper surface of the foot rest floor and, hence, an increased area is available for resting the feet. The driver is, thereby, allowed to drive the motor scooter in a comfortable position. A preferred arrangement of the fuel filling mouth, the fuel strainer and the fuel tank side-by-side widthwise of the motor scooter within a space behind the center cover enables a compact arrangement of the components of the fuel supply system within the same space. A preferred disposition of the fuel filling mouth, the fuel strainer and the fuel pump on a level above the foot rest floor enables the provision of a fuel tank having an increased capacity under the foot rest floor. Still further, if the fuel pump is disposed near the engine, the fuel pump can be connected to the engine by a fuel supply pipe having a reduced length.

In a preferred form of the invention, a heat insulating member can be provided between the fuel pump and the engine to insulate the fuel pump from the heat generated by the engine, which enables the further reduction of the length of the fuel supply pipe interconnecting the fuel pump and the engine.

Some embodiments of the invention will now be described by way of example and with reference to the accompanying drawings, in which:-
Figure 1 is a partial side elevation, partly in section, of a motor scooter employing a fuel supply system according to the present invention;
Figure 2 is a sectional view taken along line II-II of Figure 1;
Figure 3 is a fragmentary longitudinal sectional view taken along line III-III of Figure 2;
Figure 4 is a fragmentary longitudinal sectional view taken along line IV-IV of Figure 2;
Figure 5 is a partial sectional side elevation of a motor scooter according to a second embodiment of the invention;

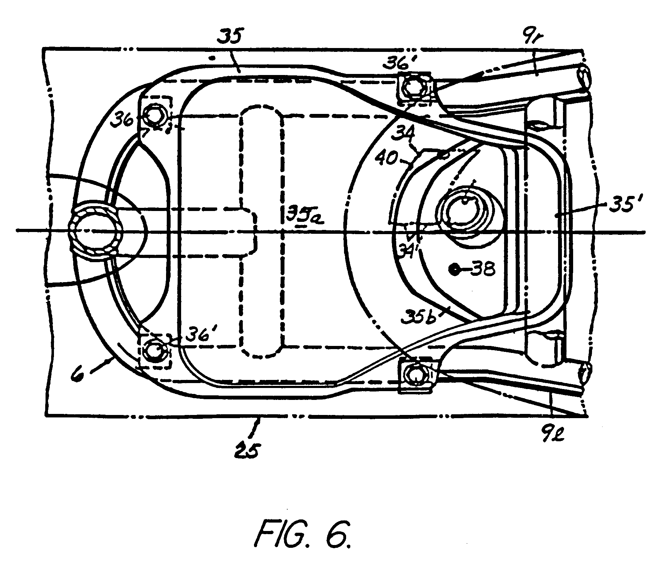

Figure 6 is a sectional view taken along line VI-VI of Figure 5;
Figure 7 is a perspective view of the main frame of the chassis of the motor scooter of Figure 1;
Figure 8 is an exploded perspective view illustrating the fuel tank and adjacent cover members;
Figure 9 is an enlarged side elevational view, party in section, illustrating the fuel pump and associated components;
Figure 10 is a front view of a portion of Figure 9; and
Figures 11 and 12 are views illustrating third and fourth embodiments of the invention.

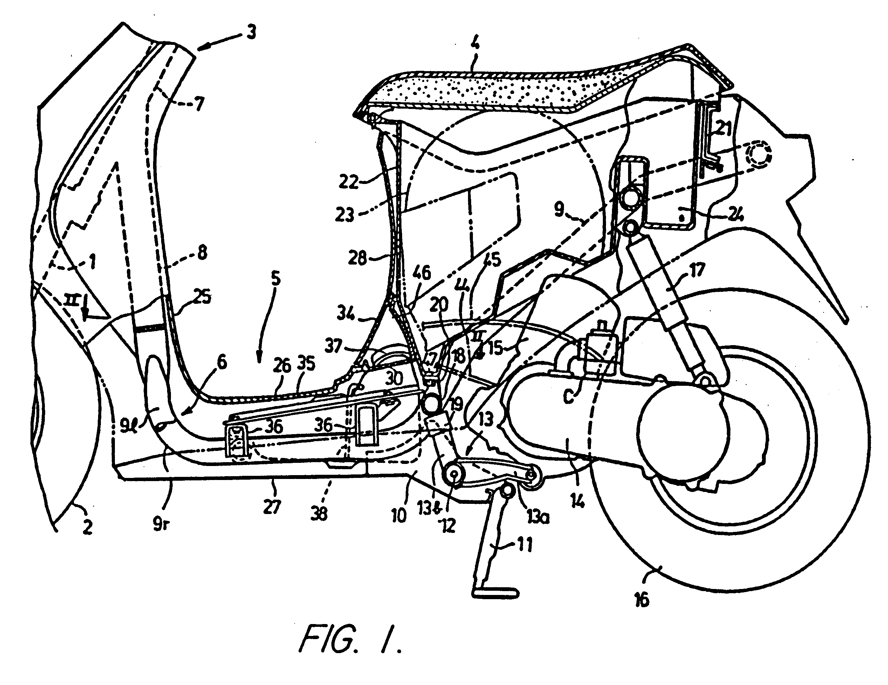

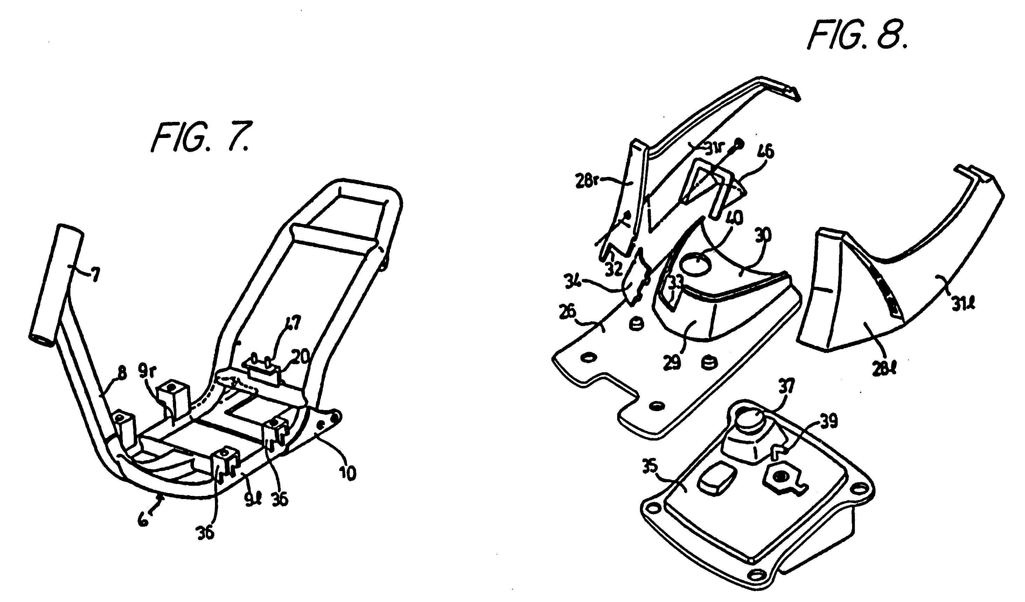

Figure 1 is a longitudinal sectional side elevation showing a relevant portion of a motor scooter incorporating a fuel supply system according to a first preferred embodiment of the present invention. A steering head 3 is formed in the front portion of the motor scooter. A front wheel 2 is suspended on the steering head 3 below the same by a front fork 1, and a handle (not shown) is provided on the upper end of the steering head 3. A floor section 5 is formed in the lower portion of the body between the steering head 3 and a seat 4 is provided in the rear portion of the body. The steering head section and the seat section are interconnected by a substantially U-shaped main frame 6. As shown in Figure 7, the main frame 6 is composed of a head pipe 7, a down pipe 8 having an upper end fixed to the head pipe 7 and extending obliquely downwardly, a pair of frame pipes 9 (a right frame pipe 9r and a left frame pipe 9ℓ) branched from the lower end of the down pipe 8 respectively to the right and left and having each a horizontal portion extending toward the rear along the floor section 5, a rising portion rising from the rear end of the horizontal portion upwardly and a rear portion extending toward the rear from the upper end of the rising portion, and cross members extending between and interconnecting the pair of frame pipes 9r and 9ℓ.

A bracket 10 is welded to the frame 6 at the junction of the horizontal portion and the rising portion of the frame pipe 9 so as to extend rearwardly. A retractable stand 11 is joined pivotally to the extremity of the bracket 10 by a pivot shaft 12, and a lever 13 is joined pivotally to the middle portion of the bracket 10. The lever 13 has an arm 13a extending toward the rear. The arm 13a is joined pivotally at the rear end thereof to a power unit 14. An engine 15 is mounted integrally on the power unit 14 in the front portion of the same, and a rear wheel 16 is supported rotatably on the power unit 14 in the rear end of the same. A shock absorber 17 is extended between the rear end of the power unit 14 and the frame pipe 9. The other arm 13b of the lever 13 has a cylindrical shape. The upper end of the arm 13b is fitted in a cylindrical rubber stopper 19 attached to a cross pipe 18 interconnecting the frame pipes 9r and 9ℓ. The vertical movement of the power unit 14 is controlled elastically by the stopper 19.

A helmet storage container 22 is disposed above the power unit 14 and is fixed to brackets 20 and 21 attached to the frame pipe 9. The seat 4 is mounted on and fastened to the helmet container 22.

A helmet 23 is contained in the helmet container 22, and a kit box 24 is formed in the rear section thereof.

The chassis principally formed by the main frame 6, is covered with a body cover 25. The body cover 25 has a foot rest floor 26 extending over and covering the frame pipes 9 in the floor section 5, an under cover member 27 extending under and covering the lower and side surfaces of the frame pipes 9, and a center cover 28 rising from the rear end of the foot rest floor 26 to the front end of the bottom of the seat 4. As shown in Figure 8, the foot rest floor 26 having the shape of a flat plate, extends between the front and rear ends of the floor section 5 and has an arcuately formed rising wall 29 in the rear portion thereof. A crescent-shaped partition wall 30 extends toward the rear from the rear surface of the rising wall 29 in a plane above the plate-shaped front portion of the foot rest floor 26.

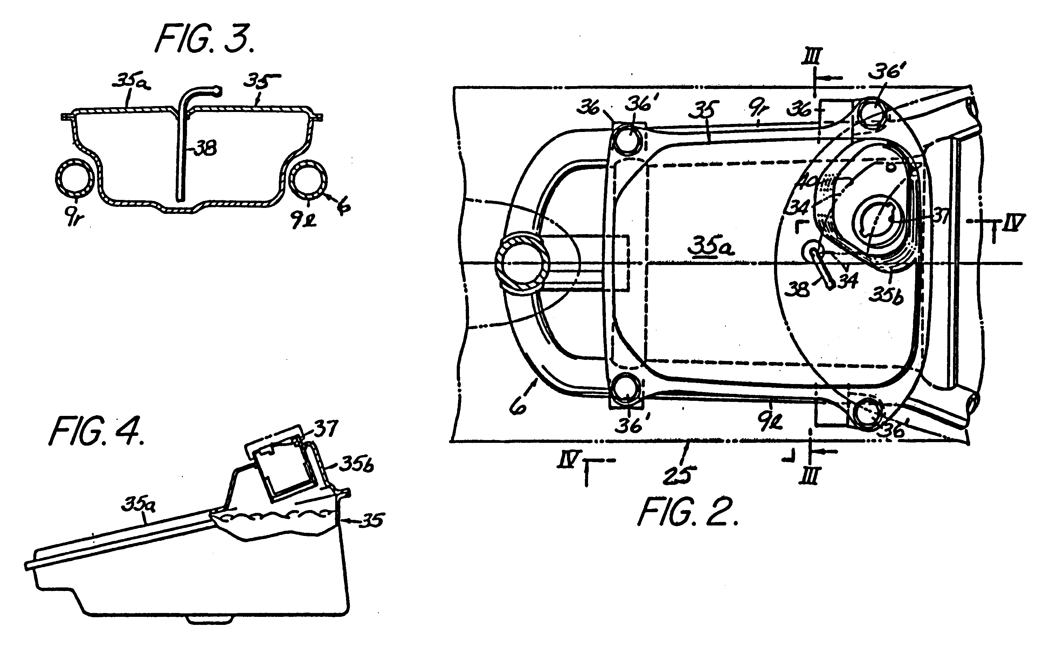

The upper edge of the rising wall 29 is joined to the lower edge of the center cover 28. As shown in Figure 8, the center cover 28 is divided into two parts, namely, a right center cover member 28r and a left center cover member 28ℓ, along the center line of the chassis. Side covers 31r and 31ℓ, respectively, for covering the opposite sides of the chassis under the seat 4 are formed integrally with the right and left center cover members 28r and 28ℓ, respectively. A recess 32 is formed in the lower portion of the right center cover member 28r, and a recess 33 is formed in the right-hand side of the rising wall 29 so as to correspond to the recess 32. When the center cover 28 is joined to the rising wall 29, a rectangular window is formed by the recesses 32 and 33 in the right-hand lower portion of the center cover 28. The window is covered with lid 34 connected by hinges 34' as shown in Figure 2.

A fuel tank 35 is disposed within a space enclosed by the foot rest floor 26 and the under cover 27 adjacent the frame pipes 9r and 9ℓ, extends into the central space which is bounded on each side by the said frame pipes, and is fastened to brackets 36 fixed to the frame pipes 9r and 9ℓ via bolts 36'. The upper surface 35a of the tank 35 is provided in its rear portion with a bulge 35b. The bulge 35b is closed in a dead space formed between the container 22 and the rising wall 29. As best shown in Figure 4, a fuel filling mouth 37 is formed in the bulge 35b on the upper wall of the fuel tank 35. A fuel outlet pipe 39 is inserted through the upper wall of the fuel tank 35 at a position on the left side of the fuel filling mouth 37. The fuel filling mouth 37 projects upward toward an opening 40 formed in the partition wall 30 and opens opposite the window formed of the recesses 32 and 33. Accordingly, fuel can be filled in the fuel tank 35 through the fuel filling mouth 37 after opening the lid 34.

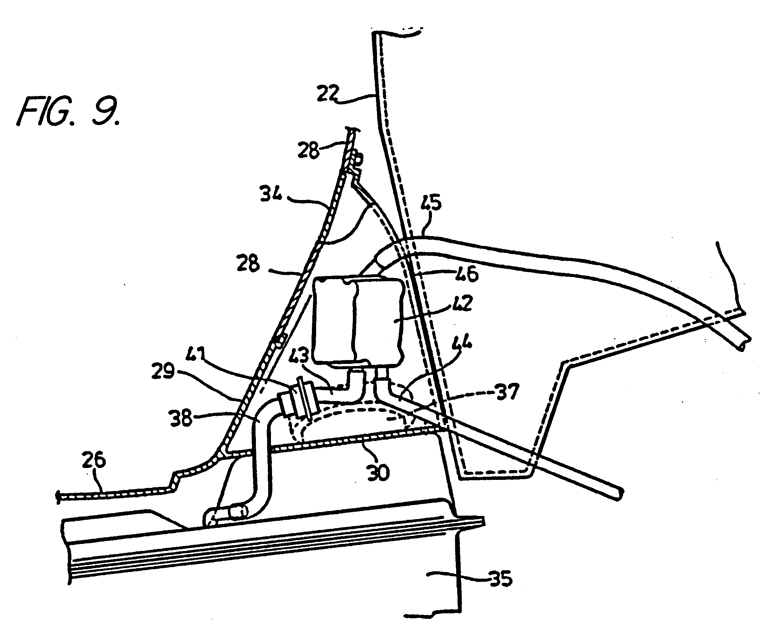

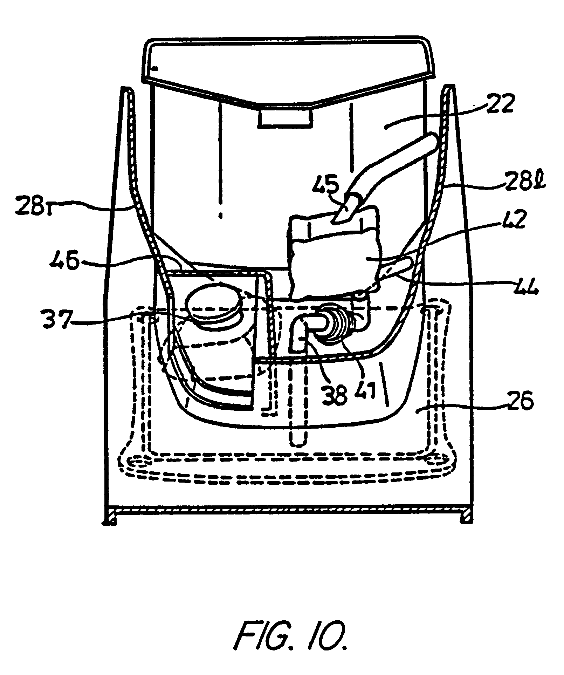

As shown in Figures 9 and 10, a fuel strainer 41 and a fuel pump 42 are disposed above the partition wall 30 on the left side of the fuel filling mouth 37 and are fastened to a bracket fixed to the main frame. A fuel supply pipe 38 connected at one end thereof to the fuel outlet pipe 39 is extended upwardly through the partition wall 30 and is connected to the inlet of the strainer 41. The outlet of the strainer 41 is connected to the suction port of the fuel pump 42 by a suction pipe 43. The fuel pump 42 is of a negative pressure type operated by the negative pressure generated by the engine 15. Indicated at 44 is a negative-pressure pipe for applying a negative pressure generated by the engine 15 to the fuel pump 42. The fuel discharged by the fuel pump 42 is fed through a fuel feed pipe 45 to a carburetor C, which in turn feeds the fuel to the engine 15 (Figure 1). A partition wall member 46 is provided behind the fuel filling mouth 37, the strainer 41 and the fuel pump 42 arranged over the partition wall 30. The front wall of the helmet container 22 extends behind and along the partition wall member 46. The lower portion of the helmet container 22 extends below the partition wall member 46 and is fastened to the bracket 20 with a bolt 47.

In this embodiment thus constructed, since the fuel tank 35 is formed of a flat shape so as to be disposed in a horizontal position under the foot rest floor 26 of the body panel 25, the dead space under the body panel 25 can be utilized for accommodating a fuel tank 35 having a comparatively large capacity. Furthermore, since the fuel tank 35 is disposed between the right and left frame pipes 9 of the frame 6, the fuel tank 35 can be guarded from obstacles. The fuel filling mouth 37 of the fuel tank 35 disposed under the foot rest floor 26 projects into the space behind the center cover 28 and does not project above the foot rest floor 26, and hence the foot rest floor 26 has a wide flat upper surface. Since the fuel filling mouth 37, the strainer 41 and the fuel pump 42 are disposed in a compact arrangement within the space enclosed by the partition wall 30, the center cover 28 and the partition wall member 46 in an upper position behind the foot rest floor 26 and near the engine 15 of the power unit 14, the fuel supply system is simplified and the length of the fuel supply piping is reduced. Furthermore, such an arrangement of the fuel filling mouth 37, the fuel strainer 41 and the fuel pump 42 further enhances the provision of a large tank having an increased capacity as the fuel tank 35. Still further, the front wall of the helmet container 22 extends along the partition wall member 46 to a position below the partition wall member 46 to shield the fuel pump 42 and the associated components from the engine 15. Thus, the helmet container 22 functions as a heat insulating member which intercepts the heat radiated from the engine 15.

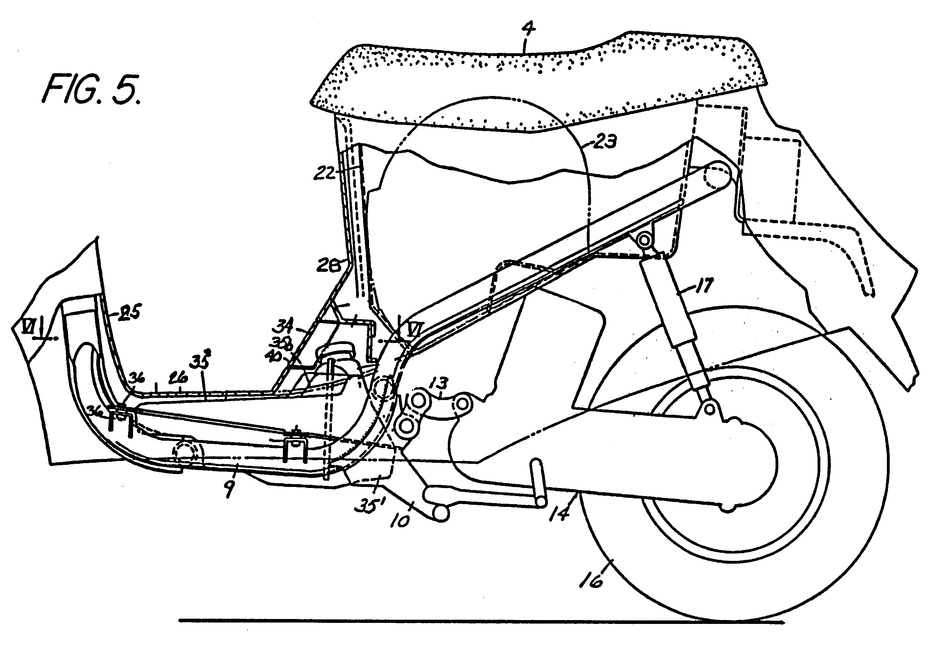

In the embodiment of Figure 5, the junction of the frame 6 and the linkage 13 for supporting the front end of the power unit 14 in the second embodiment is higher than that in the first embodiment, and the fuel tank 35 in the second embodiment has a rear extension 35'. The fuel tank 35 is disposed with the rear extension 35' received in a dead space under the linkage 13. Thus, the fuel tank 35 in the second embodiment has a capacity greater than that of the fuel tank 35 in the first embodiment. As shown in Figure 5, the upper wall of the fuel tank 35 is downwardly inclined in a state where the main stand 20 is retracted, and, hence, it is possible to make the fuel spilt in filling fuel in the fuel tank 35 with the rider seated on the seat to flow toward the front. Thus, the second embodiment exerts essentially the same functions and effects as those of the first embodiment.

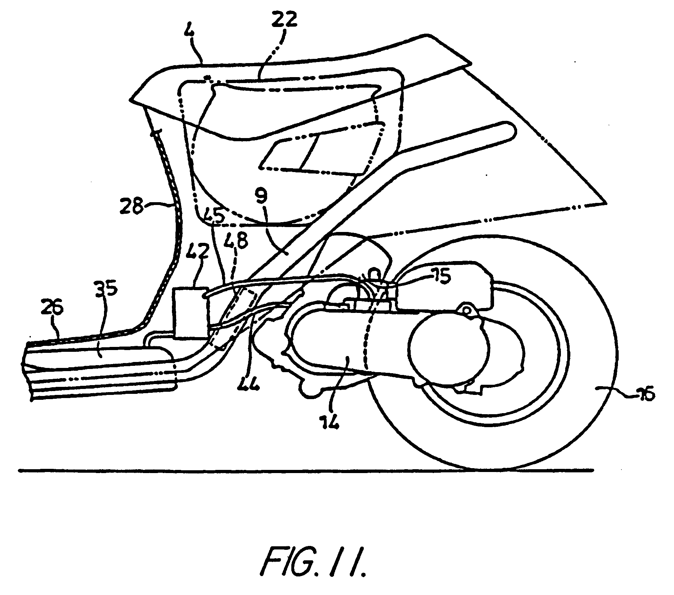

Figure 11 shows a fuel supply system according to a third embodiment of the present device. In this embodiment, the helmet storage container 22 is disposed in the upper section of the rear portion of the chassis, and hence the helmet container 22 does not function as a heat insulating member. Accordingly, a cross plate 48 is extended in front of the engine 15 between the right and left frame pipes 9 of the chassis to intercept the heat radiated from the engine 15. The cross plate 48 serves also as a frame reinforcing member.

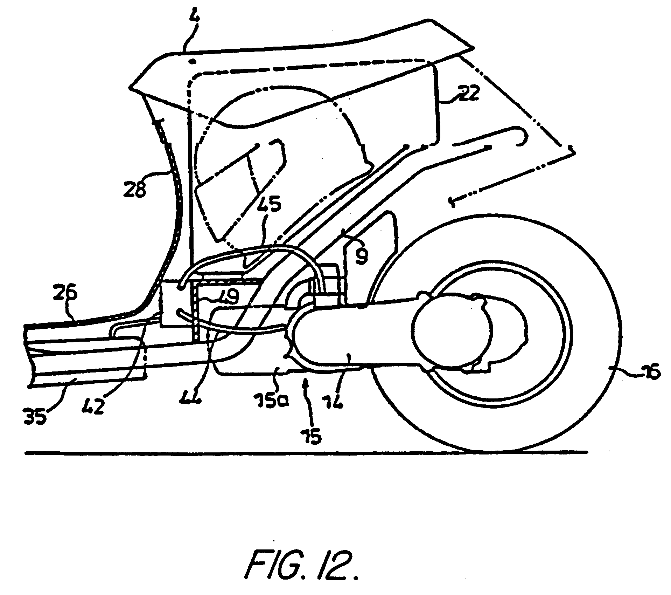

Figure 12 shows a fuel supply system according to a fourth embodiment of the present invention. A motor scooter incorporating the fuel supply system in the fourth embodiment is equipped with a horizontal engine 15 having a horizontal cylinder 15a extending to the front. A cross plate 49 having an L-shaped cross section is extended between the right and left frame pipes 9 so as to cover the front surface and upper surface of the cylinder 15a. The cross plate 49 serves as a heat insulating member for insulating the fuel pump 42 from heat, and as a member for supporting a helmet box 22.

As is apparent from the foregoing description of the present embodiments, there is provided a fuel tank assembly for a motor scooter having a large luggage container adjacent to the fuel tank whereby the front lower portion of the container is adjacent to the rear of the fuel tank so that both the fuel tank and the luggage container can be provided with increased capacity and the center of gravity of the motor scooter can be lowered. An accommodating space for the functional parts of the fuel tank assembly or of the engine can be disposed above the fuel tank and below the front lower portion of the luggage container behind the center cover of the seat mount. A fuel tank which is substantially horizontally flat is disposed under the foot rest floor with the fuel filling mouth thereof projecting into a space behind the center cover. A fuel strainer and a fuel pump can be disposed beside the fuel filling mouth within the space. Alternatively, the space can be occupied by an air cleaner, or the like. Accordingly, the foot rest floor can be formed in a wide, flat surface, the fuel supply system can be simplified, the length of the fuel piping can be reduced, and a large fuel tank having a large capacity can be protectively disposed between spaced frame members under the foot rest floor.

Furthermore, since a heat insulating member is provided between the fuel pump and the engine, the fuel pump can be disposed sufficiently near the engine without entailing adverse influence of the heat radiated by the engine on the fuel pump, and thereby the piping connecting the fuel pump to the engine can be simplified and the length of the piping can be reduced.

Still further, since the upper wall of the fuel tank is inclined downwardly toward the front and is in close proximity to the foot rest floor, the center of gravity of the motor scooter is lowered, and the disturbance of the fuel due to the vertical vibrations and acceleration of the motor scooter is suppressed to improve the running performance of the motor scooter.

Moreover, since the fuel filling mouth is provided in the rear portion of the fuel tank, the foot rest floor can be formed in a flat shape so that the rider is able to put his feet properly on the foot rest floor.

It should be further understood that, although preferred embodiments of the invention have been illustrated and described herein, changes and modifications can be made in the described arrangements without departing from the scope of the appended claims.

## Claims

1. A motor scooter comprising a frame (6) mounting longitudinally spaced front and rear wheels (2, 16), a body cover (25) covering said frame and having a center cover part (28) extending upwardly to the front end of a seat (4), a foot rest floor (26) positioned forwardly of said center cover part (28), said frame (6) including two laterally spaced frame pipes (9r, 9l) which support said foot rest floor, and a fuel tank (35) positioned below said foot rest floor adjacent said frame pipes, characterised in that said fuel tank extends into the central space which is bounded on each side by said laterally spaced frame pipes (9r, 9l), the fuel tank being formed in its rear portion with a bulge (35b) in its upper surface (35a), and a fuel filler mouth (37) being provided which penetrates the said rear portion of the fuel tank in the said bulge, so that an air space surrounds the said fuel filler mouth within the bulge.

2. A motor scooter according to claim 1, further comprising a storage compartment (22) positioned below said seat (4) and having a front lower portion disposed in adjacent relation to the rear of said fuel tank (35).

3. A motor scooter according to claim 1 or 2, in which said fuel tank (35) has a limited vertical height and an expansive flat top surface in closely spaced relation to said foot rest floor (26).

4. A motor scooter according to claim 3, in which said fuel tank (35) is inclined downwardly toward said front wheel (2).

5. A motor scooter according to claim 2, including a functional parts accommodating space disposed in a dead space within said center cover part (28) and positioned between the front lower portion of a storage compartment (22) and the rear of said fuel tank (35).

6. A motor scooter according to claim 5, in which the said fuel filler mouth (37) penetrates the rear portion of said fuel tank (35) toward one lateral side of said fuel tank top surface and a fuel pump (42) is positioned over the other lateral side of said fuel tank top surface within said accommodating space.

7. A motor scooter according to any preceding claim, including a power unit (14) pivotally attached at one end to said frame (9) and having said rear wheel (16) rotatably mounted on the free end thereof, said power unit mounting an engine (15) and means (22; 48; 49) forming a heat shield positioned between said engine and a fuel pump (42).

8. A motor scooter according to claim 7, in which said heat shield is provided by a front lower portion (22) said storage compartment.

9. A motor scooter according to claim 7, in which said heat shield comprises a heat insulating partition (48; 49) extending between said frame pipes (9) intermediate said engine (15) and said fuel pump (42).

10. A motor scooter according to any preceding claim, including an air cleaner (65) disposed in a dead space within said body cover (25).

11. A motor scooter according to claim 7, including a suspension means (17) suspendedly supporting a power unit (14) and in which the bottom of a storage compartment (22) contains a recess disposed in overlying relation to said suspension means.

12. A motor scooter according to claim 11, in which said recess in said compartment bottom projects interiorly of said compartment forming a partition dividing said compartment into two longitudinally spaced sections (22, 24).

## Patentansprüche

1. Motorroller mit einem Rahmen (6), an dem mit Längsabstand angeordnete Vorder- und Hinterräder (2, 16) angebracht sind, einer Karosserieabdeckung (25), die den Rahmen abdeckt und ein mittleres Abdeckteil (28) aufweist, das sich zu dem Vorderende eines Sitzes (4) nach oben erstreckt, einem Fußauflageboden (26), der vor dem mittleren Abdeckteil (28) angeordnet ist, wobei der Rahmen (6) zwei mit seitlichem Abstand angeordnete Rahmenrohre (9r, 9l) aufweist, die den Fußauflageboden tragen, und einem Kraftstofftank (35), der unter dem Fußauflageboden nahe den Rahmenrohren angeordnet ist,
**dadurch gekennzeichnet,**
daß der Kraftstofftank sich in den Mittelraum erstreckt, der an jeder Seite durch die mit seitlichem Abstand angeordneten Rahmenrohre (9r, 9l) begrenzt ist, wobei der Kraftstofftank in seinem hinteren Abschnitt mit einer Ausbuchtung (35b) in seiner oberen Fläche (35a) ausgebildet ist, und ein Kraftstoffeinfüllmund (37) vorgesehen ist, der den hinteren Abschnitt des Kraftstofftanks in der Ausbuchtung durchdringt, so daß den Kraftstoffeinfüllmund in der Ausbuchtung ein Luftraum umgibt.

2. Motorroller nach Anspruch 1, der weiter einen Aufbewahrungsraum (22) umfaßt, der unter dem Sitz (4) angeordnet ist und einen vorderen Unterabschnitt aufweist, der bezüglich der Rückseite des Kraftstofftanks (35) benachbart angeordnet ist.

3. Motorroller nach Anspruch 1 oder 2, in dem der Kraftstofftank (35) eine begrenzte Vertikalhöhe und eine ausgedehnte flache obere Fläche aufweist, die bezüglich des Fußauflagebodens (26) mit geringem Abstand angeordnet ist.

4. Motorroller nach Anspruch 3, in dem der Kraftstofftank (35) zu dem Vorderrad (2) hin nach unten geneigt ist.

5. Motorroller nach Anspruch 2, der einen Funktionsteile aufnehmenden Raum aufweist, der in einem Totraum in dem mittleren Abdeckteil (28) angeordnet und zwischen dem vorderen Unterabschnitt eines Aufbewahrungsraums (22) und der Rückseite des Kraftstofftanks (35) positioniert ist.

6. Motorroller nach Anspruch 5, in dem der Kraftstoffeinfüllmund (37) den Hinterabschnitt des Kraftstofftanks (35) zu einer Lateralseite der oberen Fläche des Kraftstofftanks hin durchdringt und eine Kraftstoffpumpe (42) über der anderen Lateralseite der oberen Fläche des Kraftstofftanks innerhalb des Aufnahmeraums angeordnet ist.

7. Motorroller nach einem der vorhergehenden Ansprüche, der eine Antriebseinheit (14) aufweist, die an einem Ende des Rahmens (9) gelenkig angebracht ist und ein Hinterrad (16) aufweist, das an dessen freiem Ende drehbar angebracht ist, wobei an der Antriebseinheit ein Motor (15) und Mittel (22, 48, 49) angebracht sind, die ein zwischen dem Motor und einer Kraftstoffpumpe (42) angeordnetes Hitzeschild bilden.

8. Motorroller nach Anspruch 7, in dem das Hitzeschild durch einen vorderen unteren Abschnitt (22) des Aufbewahrungsraums vorgesehen ist.

9. Motorroller nach Anspruch 7, in dem das Hitzeschild eine wärmeisolierende Unterteilung (48, 49) umfaßt, die zwischen den Rahmenrohren (9) und zwischen dem Motor (15) und der Kraftstoffpumpe (42) verläuft.

10. Motorroller nach einem der vorhergehenden Ansprüche, der einen Luftfilter (65) aufweist, der in einem Totraum in der Karosserieabdeckung (25) angeordnet ist.

11. Motorroller nach Anspruch 7, der ein Aufhängungsmittel (17) umfaßt, das eine Antriebseinheit (14) federnd stützt, und in dem der Boden eines Aufbewahrungsraums (22) eine Ausnehmung enthält, die über dem Aufhängungsmittel liegend angeordnet ist.

12. Motorroller nach Anspruch 11, in dem die Ausnehmung in dem Boden des Raums ins Innere des Raums ragt und eine Unterteilung bildet, die den Raum in zwei in Längsrichtung beabstandete Abschnitte (22, 24) unterteilt.

## Revendications

1. Scooter comprenant un cadre (6) assurant le montage de roues avant et arrière (2, 16) espacées longitudinalement, un carénage (25) recouvrant ledit cadre et présentant une partie centrale de recouvrement (28) s'étendant vers le haut jusqu'à l'extrémité antérieure d'un siège (4), un plancher repose-pieds (26) placé en avant de ladite partie centrale de recouvrement (28), ledit cadre (6) comportant deux tubulures de cadre (9r, 9ℓ) espacées latéralement et supportant ledit plancher repose-pieds, et un réservoir de carburant (35) placé au-dessous dudit plancher repose-pieds, au voisinage direct desdites tubulures du cadre, caractérisé par le fait que ledit réservoir de carburant s'engage dans l'espace central qui est délimité de part et d'autre par lesdites tubulures (9r , 9ℓ) du cadre , espacées latéralement, le réservoir de carburant présentant, dans sa région postérieure, un renflement (35b) ménagé dans sa face supérieure (35a) , et un orifice (37) de déversement de carburant faisant saillie dans ladite région postérieure du réservoir de carburant, dans ledit renflement, de telle sorte qu'une poche d'air entoure ledit orifice de déversement de carburant à l'intérieur du renflement.

2. Scooter selon la revendication 1, comprenant en outre un compartiment de rangement (22) placé au-dessous dudit siège (4), et présentant une région inférieure antérieure située au voisinage direct de l'arrière dudit réservoir de carburant (35).

3. Scooter selon la revendication 1 ou 2, dans lequel ledit réservoir de carburant (35) présente une hauteur verticale limitée, et une face supérieure plane allongée intimement rapprochée dudit plancher repose-pieds (26).

4. Scooter selon la revendication 3, dans lequel ledit réservoir de carburant (35) est incliné vers le bas en direction de ladite roue avant (2).

5. Scooter selon la revendication 2, présentant une cavité recevant des pièces fonctionnelles, située dans un espace mort à l'intérieur de ladite partie centrale de recouvrement (28), et interposée entre l'arrière dudit réservoir de carburant (35) et la région inférieure antérieure d'un compartiment de rangement (22).

6. Scooter selon la revendication 5, dans lequel ledit orifice (37) de déversement de carburant fait saillie dans la région postérieure dudit réservoir de carburant (35), vers l'un des côtés latéraux de ladite face supérieure du réservoir de carburant, et une pompe de carburant (42) se trouve sur l'autre côté latéral de ladite face supérieure du réservoir de carburant, à l'intérieur de ladite cavité réceptrice.

7. Scooter selon une quelconque revendication précédente, présentant un bloc-moteur (14) fixé audit cadre (9) de manière pivotante, par l'une de ses extrémités et sur l'extrémité libre duquel ladite roue arrière (16) est montée à rotation, ledit bloc-moteur assurant le montage d'un moteur (15) et de moyens (22 ; 48 ; 49) formant un bouclier thermique interposé entre ledit moteur et une pompe de carburant (42).

8. Scooter selon la revendication 7, dans lequel ledit bouclier thermique est conféré par une région inférieure antérieure (22) dudit compartiment de rangement.

9. Scooter selon la revendication 7, dans lequel ledit bouclier thermique comprend une cloison (48 ; 49) d'isolation thermique s'étendant entre lesdites tubulures (9) du cadre, dans une position intercalaire entre ledit moteur (15) et ladite pompe de carburant (42).

10. Scooter selon une quelconque revendication précédente, présentant un filtre à air (65) logé dans un espace mort à l'intérieur dudit carénage (25).

11. Scooter selon la revendication 7, présentant un moyen de suspension (17) supportant un bloc-moteur (14) avec effet de suspension ; et dans lequel le fond d'un compartiment de rangement (22) comporte un renfoncement sus-jacent audit moyen de suspension.

12. Scooter selon la revendication 11, dans lequel ledit renfoncement ménagé dans ledit fond du compartiment fait saillie dans l'espace interne dudit compartiment, en formant un cloisonnement qui subdivise ledit compartiment en deux parties (22, 24) espacées longitudinalement.
